# EUROPEAN PATENT APPLICATION

(11) **EP 2 608 586 A1**
(43) Date of publication of application: **26.06.2013**
(21) Application number: 11817719.5
(22) Date of filing: 15.06.2011
(51) Int. Cl.: H04W 12/00

(54) **SECURITY INFORMATION OBTAINING METHOD AND MULTI-SYSTEM NETWORK**

(30) Priority: 17.08.2010 CN 201010258902
(71) Applicant: ZTE Corporation, Shenzhen, Guangdong 518057 (CN)
(72) Inventor: LIU, Fulei, Shenzhen Guangdong 518057 (CN); DOU, Jianwu, Shenzhen Guangdong 518057 (CN); DONG, Xiaohu, Shenzhen Guangdong 518057 (CN)
(74) Representative: Gervasi, Gemma
(86) International application number: PCT/CN2011/075755
(87) International publication number: WO 2012/022192

(57) **Abstract**

A method for obtaining security information and multi-system network are provided by the present invention. The method includes: in an initial access process of a user equipment, a multi-system core network sending a source system key to a multi-system radio access network (101); during a multi-system handover, if the source system key is an initial value, the multi-system radio access network performing key conversion on the source system key to obtain a target system key (102). With the method for obtaining security information and multi-system network of the present invention, the target system key can be acquired in the condition of no participation of the core network.

## Description

### Technical Field

The present invention relates to mobile communication technology, and particularly, to security information obtaining method and multi-system network.

### Background of the Related Art

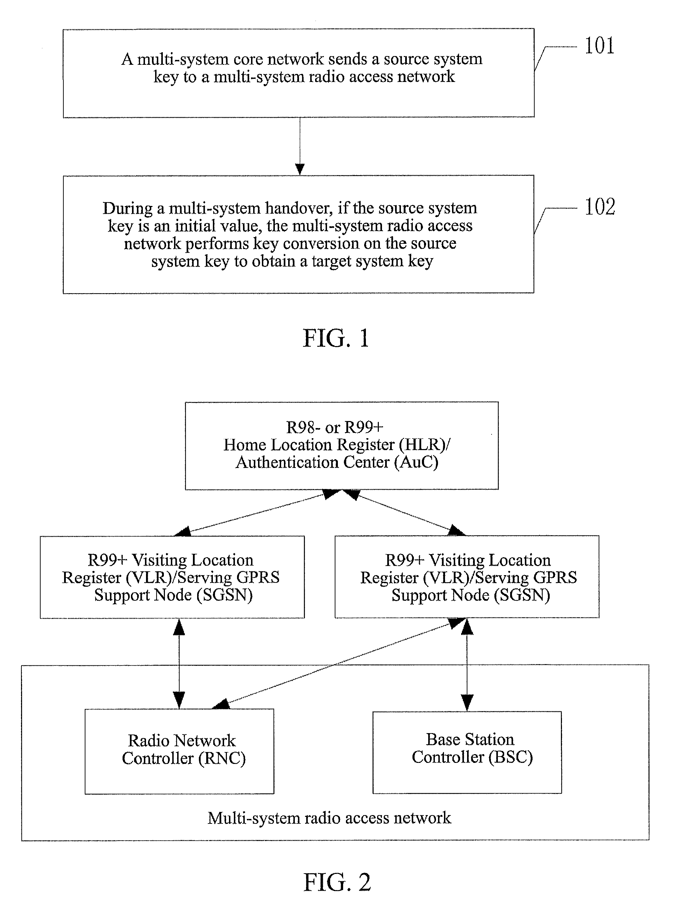

When a subscriber performs a multi-system handover, different key values are required to perform the handover to different systems. The multi-system refers to that radio sides of a Universal Mobile Telecommunications System (UMTS), Global System for Mobile Communications (GSM) and Time Division-Synchronous Code Division Multiple Access (TD-SCDMA) system can use a single-mode form (mutually independent), and also can use a multi-mode form (e.g. a Radio Network Controller (RNC) of the UMTS and a Base Station Controller (BSC) of the GSM are in a common mode, which is equivalent to one network element, such as a multi-system radio access network as shown in FIG. 2).

Currently, authentication and ciphering of the UMTS and GSM defined in the 3GPP are both carried out independently and separately. Wherein, the authentication of the UMTS is completed between a Universal Subscriber Identity Module (USIM) and Visiting Location Register (VLR)/Serving GPRS Support Node (SGSN), Home Location Register (HLR)/Authentication Center (AuC). Both the HLR/AuC and USIM can generate an authentication quintuplet, the HLR/AuC sends the generated authentication quintuplet to the VLR/SGSN. After a mutual authentication is passed between the USIM and VLR/SGSN, with regard to a circuit switch (CS) domain, the VLR sends a Ciphering Key (CK)/Integrity Key (IK) to the Radio Network Controller (RNC), and the RNC completes the ciphering with the USIM; with regard to a packet switch (PS) domain, the SGSN completes the ciphering with the USIM. The authentication of the GSM is completed between a Subscriber Identity Module (SIM) and VLR/SGSN, HLR/AuC. The used authentication quintuplet is: Random challenge (RAND)/Expected Response (XRES)/Ciphering Key (CK)/Integrity Key (IK)/Authentication Token (AUTN). The HLR/AuC and SIM generate an authentication triplet, the HLR/AuC sends the generated authentication triplet to the VLR/SGSN, after one time of authentication verification is performed between the SIM and VLR/SGSN, with regard to the CS domain, the VLR sends a Cipher Key (Kc) to the BSC, and the BSC and SIM complete the ciphering; with regard to the PS domain, the SGSN and SIM complete the ciphering. The used authentication triplet is: Random challenge (RAND)/Signed Response (SRES)/Cipher Key (Kc).

At present, the authentication and ciphering of UMTS subscribers and the authentication and ciphering, and key conversion of GSM subscribers defined in the 3GPP TS33.102 are all completed by a core network (the HLR/AuC or VLR/SGSN) at a network side, which is not related to a UMTS Terrestrial Radio Access Network (UTRAN) or a GSM Base Station System (BSS). Therefore, when a mobile subscriber performs cross-system handover, e.g., the handover is performed from the UMTS to GSM, if the two systems both adopt the ciphering, and ciphering keys are different, with regard to a CS domain voice service, it is required to wait until the radio side RNC or BSC obtain keys from the VLR that the service can be continued. Therefore, with regard to voice services with a higher requirement on instantaneity, handover delay and interruption are relatively long.

### Summary of the Invention

The technical problem required to be solved by the present invention is to provide a method for obtaining security information and multi-system network, to acquire a target system key in the condition of no participation of a core network.

In order to solve the above technical problem, the present invention provides a security information obtaining method, which comprises:
in an initial access process of a user equipment, a multi-system core network sending a source system key to a multi-system radio access network;
during a multi-system handover, if the source system key is an initial value, the multi-system radio access network performing key conversion on the source system key to obtain a target system key.

Alternatively, the multi-system radio access network comprises a source system radio access network and a target system radio access network; the step of the multi-system radio access network performing key conversion on the source system key to obtain a target system key during the multi-system handover if the source system key is the initial value comprises: the source system radio access network receiving the source system key, and if the source system key is the initial value, the source system radio access network converting the source system key into the target system key, and sending the target system key to the target system radio access network, or the source system radio access network sending the source system key to the target system radio access network, and the target system radio access network converting the source system key into the target system key.

Alternatively, the above method further comprises: during the multi-system handover, the source system radio access network sending ciphering indicator information used to indicate whether a ciphering function is enabled before the system handover to the target system radio access network, and the target system radio access network judging whether to enable the ciphering function according to the ciphering indicator information.

Alternatively, the above method further comprises: if the source system key is a calculated value, and the ciphering indicator information indicates that the ciphering function is enabled, the target system radio access network acquiring the target system key from the multi-system core network.

Alternatively, the above method further comprises: during the multi-system handover, the source system radio access network sending cipher algorithm support information of user equipment for target system to the target system radio access network, and the target system radio access network performing ciphering according to a corresponding cipher algorithm.

Alternatively, in a handover preparatory stage, the source system radio access network sends the ciphering indicator information, the cipher algorithm support information of user equipment for target system, the source system key, or the converted target system key to the target system radio access network through an enhanced relocation resource request message.

Alternatively, the source system radio access network judging that the source system key is the initial value comprises: when the multi-system core network sends the source system key to the multi-system radio access network, the multi-system core network sending key indicator information simultaneously, and the multi-system radio access network judging whether the source system key is the initial value or calculated value according to the key indicator information;
or, the source system radio access network receiving and parsing an authentication message sent by the multi-system core network, and judging whether the source system key sent by the multi-system core network is the initial value according to a parsing result.

In order to solve the above technical problem, the present invention further provides a multi-system network, which comprises: a multi-system core network and a multi-system radio access network, wherein,
the multi-system core network is configured to: send a source system key to a multi-system radio network side;
the multi-system radio access network is configured to: receive the source system key, and during a multi-system handover, if the source system key is an initial value generated by the multi-system core network, perform key conversion on the source system key to obtain a target system key.

Alternatively, during the multi-system handover, a source system radio access network is configured to: send ciphering indicator information used to indicate whether a ciphering function is enabled before the system handover to a target system radio access network; the target system radio access network is configured to: judge whether to enable the ciphering function according to the ciphering indicator information.

Alternatively, during the multi-system handover, the source system radio access network is further configured to: send cipher algorithm support information of user equipment for target system to the target system radio access network; the target system radio access network is further configured to: perform ciphering according to a corresponding cipher algorithm.

Alternatively, the source system radio access network is configured to: in a handover preparatory stage, send the ciphering indicator information, the cipher algorithm support information of user equipment for target system, the source system key, or the converted target system key to the target system radio access network through an enhanced relocation resource request message.

The main idea of the method for obtaining security information and multi-system network of the present invention is: adding a key conversion function in the multi-system radio access network to make the multi-system radio access network can obtain the target system key by converting the source system key in the condition of no participation of the multi-system core network during the multi-system handover, which reduces the process and time of performing signaling interaction between the RNC/BSC and VLR to obtain the ciphering key, improves a handover success rate, and enhances experience of the subscriber on the voice service.

### Brief Description of Drawings

FIG. 1 is a schematic diagram of the method for obtaining security information according to the embodiment of the present invention.
FIG. 2 is a connection diagram of network elements in the multi-system network according to the embodiment of the present invention.
FIG. 3 is a schematic diagram of the improved AKA (authentication and ciphering protocol) architecture of UMTS subscribers according to the embodiment of the present invention.
FIG. 4 is a schematic diagram of the improved AKA (authentication and ciphering protocol) architecture of GSM subscribers according to the embodiment of the present invention.
FIG. 5 is a flow diagram for voice services of a UE of USIM card performing handover from the UTRAN to GSM BSS according to the embodiment of the present invention.
FIG. 6 is a flow diagram for voice services of a UE of SIM card performing handover from the BSS to UTRAN according to the embodiment of the present invention.

### Preferred Embodiments of the Present Invention

The main idea of the method for obtaining security information and multi-system network of the present invention is: adding a key conversion function in a multi-system radio access network, so as to make the multi-system radio access network can obtain a target system key by converting a source system key in the condition of no participation of a multi-system core network during a multi-system handover.

As shown in FIG. 1, the method for obtaining security information of the present invention includes following steps.

In step 101, in an initial access process of a user equipment, a multi-system core network sends a source system key to a multi-system radio access network.

The multi-system handover mentioned in the present invention refers to the handover of voice user equipments of CS domain between a 2G system and 3G system, the 3G system includes a Universal Mobile Telecommunications System (UMTS) and a Time Division-Synchronous Code Division Multiple Access (TD-SCDMA) system and so on; the 2G system includes a Global System for Mobile Communications (GSM) and so on.

The existing 2G system and 3G system are taken as an example, and a radio access network of the 2G system is a Base Station System (BSS); a radio access network of the 3G system is a UMTS Terrestrial Radio Access Network (UTRAN).

The multi-system radio access network can use a single-mode form (mutually independent), and also can be a multi-mode form (e.g., an RNC of the UMTS and a BSC of the GSM are in a common mode, which is equivalent to one network element) as shown in FIG. 2.

The RNC and BSC can be connected to the same R99+ VLR/SGSN (the R98-VLR/SGSN does not support the RNC) or two different R99+ VLR/SGSNs; and the same R98-or R99+ HLR/AuC is used as shown in FIG. 2.

Wherein, R99+ and R98- represent a version number.

In step 102, during the multi-system handover, if the source system key is an initial value, the multi-system radio access network performs key conversion on the source system key to obtain a target system key.

The multi-system radio access network comprises a source system radio access network and a target system radio access network; the source system radio access network receives the source system key, and if the source system key is the initial value, the source system radio access network converts the source system key into the target system key, and sends the target system key to the target system radio access network, or the source system radio access network sends the source system key to the target system radio access network, and the target system radio access network converts the source system key into the target system key.

In order to avoid that, decoding of the target system, after the handover, is incorrect and subscriber data can not be parsed, the source system radio access network sends, during the multi-system handover, indicator information used to indicate whether a ciphering function is enabled before the system handover to the target system radio access network, and the target system radio access network judges whether to enable the ciphering function according to the indicator information.

Since only when the source system key is the initial value, can the radio access network perform key conversion, if the source system key is a calculated value, and the indicator information indicates that the ciphering function is enabled, the target system radio access network acquires the target system key from the multi-system core network.

During the initial access of the user equipment, cipher capability support information of the user equipment (including cipher algorithm support information for target system) will be reported to the source system radio access network. During the multi-system handover, the source system radio access network sends the cipher algorithm support information of the user equipment for target system to the target system radio access network, and the target system radio access network performs ciphering according to a corresponding cipher algorithm.

Understandably, only in the condition that the ciphering function is enabled, the source system radio access network is required to send the cipher algorithm support information of the user equipment for target system and key (the source system key or the converted target system key) to the target system radio access network.

In addition, in the embodiment of the present invention, there are following two methods of the source system radio access network judging that the source system key is the initial value.
(1) When the multi-system core network sends the source system key to the multi-system radio access network, key indicator information is sent simultaneously, and the multi-system radio access network judges whether the source system key is the initial value or calculated value according to the key indicator information.
(2) The source system radio access network receives and parses an authentication message sent by the multi-system core network, and judges whether the source system key sent by the multi-system core network is the initial value according to a parsing result.

Alternatively, when the user equipment initiates the access through the RNC, and the received authentication message is a quintuplet authentication message, or, when the user equipment initiates the access through the BSC, and the received authentication message is not the quintuplet authentication message, it is judged that the key sent by the multi-system core network is the initial value.

Here, the mentioned authentication message includes an authentication request and an authentication response, if the authentication request carries an Authentication Token (AUTN) or the authentication response carries an Authentication Response parameter (extension), the authentication message is the quintuplet authentication message, otherwise the authentication message is not the quintuplet authentication message.

The 3GPP defines that messages are interacted through standard interfaces Iur-g between the BSC and RNC, China Mobile adds an ENHANCED RELOCATION RESOURCE REQUEST message and an ENHANCED RELOCATION RESOURCE RESPONSE message on the interfaces, that is, another system is informed to prepare resources before the handover, thus the handover flow and relocation flow at the radio side can be carried out in parallel. In order to speed the system handover to reduce delay, enhance a handover success rate, and improve the user experience, in a handover preparatory stage, the source system radio access network sends security information, such as ciphering indicator information, cipher algorithm support information of user equipment for target system, source system key, or the converted target system key to the target system radio access network through the ENHANCED RELOCATION RESOURCE REQUEST message of the Iur-g interfaces.

According to the existing system, the multi-system handover and key conversion in the embodiment of the present invention are:
scenario 1, during the initial access to the UMTS or TD-SCDMA system, the keys sent by the multi-system core network are a Ciphering Key (CK) and an Integrity Key (IK); when the user equipment switches from the UMTS or TD-SCDMA system to GSM system, the multi-system radio access network converts the Ciphering Key (CK) and Integrity Key (IK) into a Cipher Key (Kc);
scenario 2, during the initial access to the GSM system, the key sent by the multi-system core network is the Kc; when the user equipment switches from the GSM system to UMTS or TD-SCDMA system, the multi-system radio access network converts the Kc into the CK and IK.

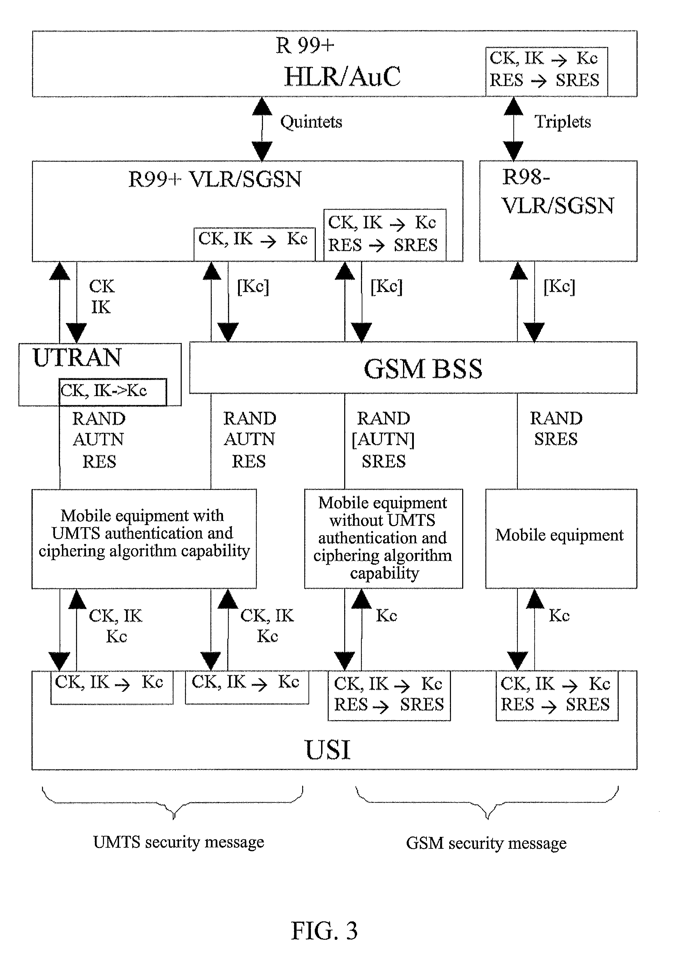

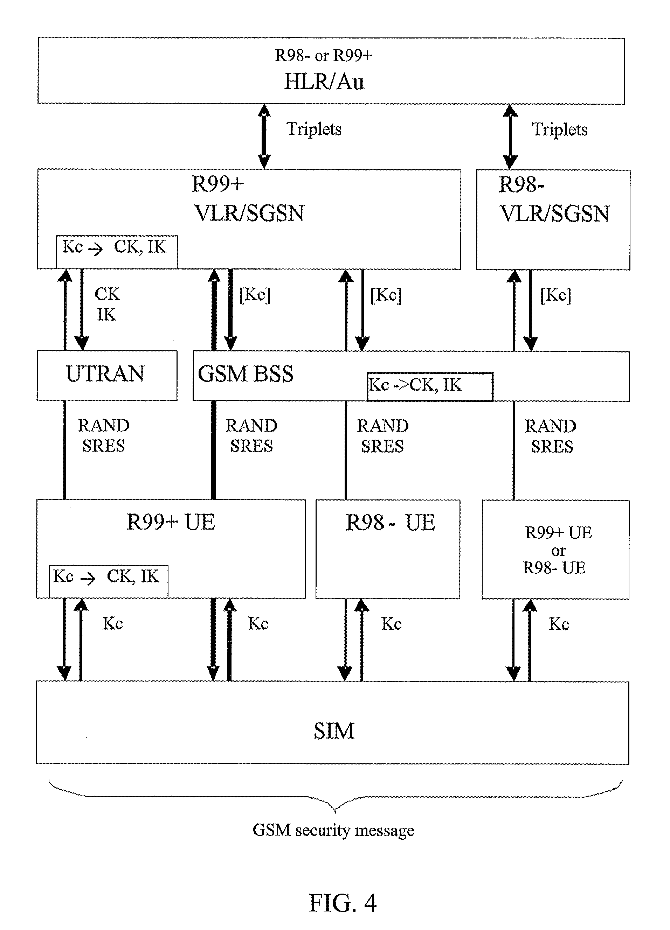

In the embodiment of the present invention, in the condition that the source system key is the initial value, modules are added to the RNC or BSC to complete the conversion from the CK/IK to Kc (a CK, IK→ Kc module is newly added to the UTRAN in FIG. 3):
conversion algorithm c3 is: Kc[GSM]=CK1 xor CK2 xor IK1 xor IK2,
wherein, both CKi and IKi are 64 bits, CK=CK1 || CK2 and IK=IK1 || IK2
modules are added to the BSC or RNC to complete the conversion from the Kc to CK/IK (a Kc→ CK, IK module is newly added to the GSM BSS in FIG. 4):
   conversion algorithm c4 is: CK[UMTS]=Kc || Kc;
   conversion algorithm c5 is: IK[UMTS]=Kc1 xor Kc2 || Kc || key xor Kc2;
   in c5, Kci is 32 bits and Kc = Kc1 || Kc2

The enhanced relocation resource request carrying the ciphering indicator information, cipher algorithm support information of user equipment for target system and source system key will be described below.

The modified ENHANCED RELOCATION RESOURCE REQUEST defined by the existing protocol structure is as shown in Table 1.

**Table 1**

| IE/Group Name | Presence | Range | IE Type and Reference | Semantics Description |
|---|---|---|---|---|
| CHOICE *type* | | | | |
| >Ciphering information to GSM | | | | |
| >>UTRAN Ciphering indicator | MP | | Enumerated (used, not used) | |
| >>MS Classmark 2 | MP | | | |
| >>MS Classmark 3 | MP | | | |
| >>Kc | OP | | | |
| | | | | |
| >Ciphering information to UTRAN | | | | |
| >>GSM Ciphering indicator | MP | | Enumerated (used, not used) | |
| >>Security capability | MP | | | |
| >>CK | OP | | | |
| >>IK | OP | | | |
| >>START-CS | OP | | | START values to be used in this CN domain |

### 1. Indicator information

The ENHANCED RELOCATION RESOURCE REQUEST of an Iur-g interface message between the RNC and BSC carries the ciphering indicator information: UTRAN Ciphering indicator and GSM Ciphering indicator, which indicates whether the current radio system enables the ciphering.

During the handover from the UTRAN to BSS, the RNC indicates whether the current system uses the ciphering, an IE UTRAN Ciphering indicator is added, and if the UTRAN system uses the ciphering, it is set as "used", otherwise it is set as "not used".

During the handover from the BSS to UTRAN, the BSS indicates whether the current system uses the ciphering, an IE GSM Ciphering indicator is added, and if the GSM system uses the ciphering, it is set as "used", otherwise it is set as "not used".

### 2. Security capability information of user equipment, namely, cipher algorithm support information of user equipment for target system

The security capability information of the UE is added in the ENHANCED RELOCATION RESOURCE REQUEST.

When establishing a connection with the RNC, the User Equipment (UE) reports capability information related to other systems, wherein Security capability (MS Classmark 2 and MS Classmark 3) related to the GSM system is included, and when the user equipment performs handover from the UTRAN to BSS, the RNC informs the BSC of the support situation of the UE to the GSM ciphering capability. According to the information reported by the UE, Optional (OP) IEs namely the MS Classmark 2 and MS Classmark 3 are added in the ENHANCED RELOCATION RESOURCE REQUEST.

When establishing a connection with the BSC, the UE will report Security capability related to the UTRAN, and when the UE performs handover from the BSS to UTRAN, the BSC informs the RNC of the support situation of the UE to the UTRAN ciphering capability. According to the information reported by the UE, an Optional (OP) IE namely the Security capability is added in the ENHANCED RELOCATION RESOURCE REQUEST.

### 3. Source system key

If the key obtained by the RNC or BSC is the initial value generated by the HLR/AuC, by taking sending the key after the conversion as an example, the RNC uses the c3 algorithm to convert the CK/IK into Kc and transfers the Kc to the BSC through the ENHANCED RELOCATION RESOURCE REQUEST. Correspondingly, the BSC uses the c4 algorithm and c5 algorithm to convert the Kc into CK/IK and transfers the CK/IK to the RNC through the ENHANCED RELOCATION RESOURCE REQUEST.

During the handover from the UTRAN to BSS, the ENHANCED RELOCATION RESOURCE REQUEST sent by the RNC carries a key IE: Kc.

During the handover from the BSS to UTRAN, the ENHANCED RELOCATION RESOURCE REQUEST sent by the BSC carries key IEs: CK, IK and START-CS used to indicate the key validity.

### Application example 1

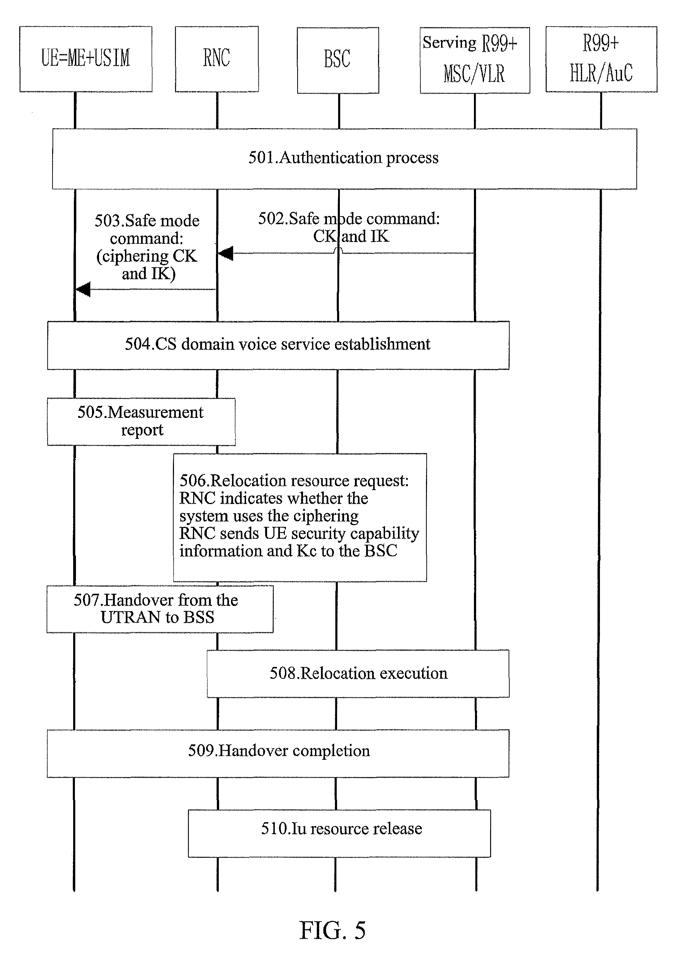

As shown in FIG. 5, a flow for voice services of a UE of USIM card performing handover from the UTRAN to GSM BSS includes following steps.

In step 501, the USIM of the UE and HLR/AuC complete an authentication.

In the authentication process, the HLR/AuC has sent ciphering keys CK/IK to MSC/VLR.

In step 502, after the authentication is passed, the MSC/VLR sends the CK/IK to a radio access side RNC through a safe mode command.

In step 503, the RNC sends a ciphering mode command to the UE, afterwards, the CK and IK are used to complete the ciphering between the RNC and UE, which mainly performs ciphering on signaling and user plane data information.

In step 504, a CS domain voice service is established between the MSC, RNC and UE.

In step 505, the UE discovers a poor network quality in the UTRAN, initiates a measurement report, and requests to perform handover to the GSM BSS.

In step 506, the RNC initiates an enhanced relocation resource request to the BSC, and following information is carried.
(1) The IE UTRAN Ciphering indicator is set as "used", which indicates a radio system has used the ciphering currently.
(2) Ciphering capability of the UE related to the GSM system: MS Classmark 2 and MS Classmark 3.
(3) The RNC uses the following formula to perform conversion for obtaining the Kc, and thus, the BSC does not need to request the VLR for the key Kc any more:
   c3: Kc[GSM]=CK1 xor CK2 xor IK1 xor IK2,
   wherein, both CKi and IKi are 64 bits, CK=CK1 || CK2 and IK=IK1 || IK2

In step 507, at a radio network side, the UE performs handover from the UTRAN to GSM.

In step 508, at a connection side of a radio network and core network, namely an Iu interface (an interface between the core network and RNC) side, relocation is performed from the UTRAN to BSS.

In the existing 3GPP protocol architecture, the BSC could not obtain the key Kc from the VLR side of the core network until in this step.

In step 509, the UE completes the handover from the UTRAN to BSS.

In step 510, the MSC/VLR informs the RNC to release resources.

### Application example 2

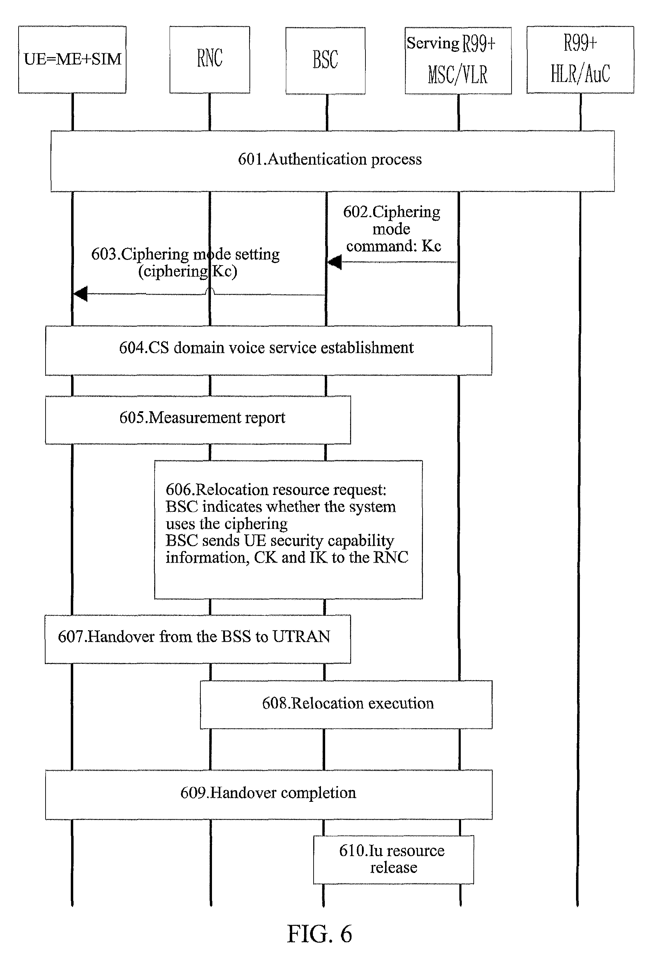

As shown in FIG. 6, a flow for voice services of a UE of SIM card performing handover from the BSS to UTRAN includes following steps.

In step 601, the SIM of the UE and HLR/AuC complete an authentication.

In the authentication process, the HLR/AuC has sent a ciphering key Kc to MSC/VLR.

In step 602, after the authentication is passed, the MSC/VLR sends the Kc to a radio access side BSC through a ciphering mode command.

In step 603, the BSC sends a ciphering mode setting message to the UE, and afterwards, the Kc is used to complete the ciphering between the BSC and UE.

In step 604, a CS domain voice service is established between the MSC, BSC and UE.

In step 605, the UE discovers a poor network quality in the BSS, initiates a measurement report, and requests to perform handover to the UTRAN.

In step 606, the BSC initiates an enhanced relocation resource request to the RNC, and following information is carried.
(1) The IE GSM Ciphering indicator is set as "used", which indicates a radio system has used the ciphering currently.
(2) Ciphering capability information of the UE to the UTRAN: Security capability.
(3) The BSC uses the following formulas to perform conversion for obtaining the CK/IK, and thus, the RNC does not need to request the VLR for the keys CK and IK any more:
   c4: CK[UMTS]=Kc || Kc;
   c5: IK[UMTS]=Kc1 xor Kc2 || Kc || Kc1 xor Kc2;

In c5, Kci is 32 bits and Kc=Kc1 || Kc2

In step 607, at a radio network side, the UE performs handover from the BSS to UTRAN.

In step 608, at a connection side of a radio network and core network, namely an Iu interface (an interface between the core network and BSC) side, relocation is performed from the BSS to UTRAN.

In the existing 3GPP architecture, the RNC obtains the keys CK and IK from the VLR side of the core network in this step.

In step 609, the UE completes the handover from the BSS to UTRAN.

In step 610, the MSC/VLR informs the BSC to release resources.

In order to implement the above method, a multi-system network in the embodiment of the present invention includes:
a multi-system core network, configured to: send a source system key to a multi-system radio network side;
a multi-system radio access network, configured to: receive the source system key, and during a multi-system handover, if the source system key is an initial value generated by the multi-system core network, perform key conversion on the source system key to obtain a target system key.

The multi-system radio access network includes a source system radio access network and a target system radio access network;
the source system radio access network is configured to: receive the source system key, if the source system key is the initial value, convert the source system key into the target system key, and send the target system key to the target system radio access network, or send the source system key to the target system radio access network;
the target system radio access network is configured to: receive the converted target system key, or receive the source system key, and convert the source system key into the target system key.

Preferably, during the multi-system handover, the source system radio access network is further configured to: send indicator information used to indicate whether a ciphering function is enabled before the system handover to the target system radio access network; the target system radio access network is further configured to: judge whether to enable the ciphering function according to the indicator information.

Preferably, during the multi-system handover, the source system radio access network is further configured to: send cipher algorithm support information of user equipment for target system to the target system radio access network; the target system radio access network performs ciphering according to a corresponding cipher algorithm.

In a handover preparatory stage, the source system radio access network sends the ciphering indicator information, cipher algorithm support information of user equipment for target system, source system key, or the converted target system key to the target system radio access network through an enhanced relocation resource request message.

In the present invention, a key conversion function is added in the multi-system radio access network to make the multi-system radio access network obtain the target system key in the condition of no participation of the multi-system core network, which reduces the process and time of performing signaling interaction between the RNC/BSC and VLR to obtain the ciphering key, especially when the RNC and BSC are connected to two different VLRs, the improvement is particularly significant. Data stream continuity of the user plane is optimized, which shortens the interruption time of the data stream of the user plane, improves a handover success rate, and enhances experience of the subscriber on the voice service.

The ordinary person skilled in the art can understand that all or part of the steps in the above method can be completed by a program instructing related hardware, and the program can be stored in a computer readable memory medium, such as a read-only memory, disk or optical disk and so on. Alternatively, all or part of the steps of the above examples also can be implemented by using one or multiple integrated circuits. Correspondingly, each unit in the above examples can be implemented in a form of hardware, and also can be implemented in a form of software function module. The present invention is not limited to any combination of hardware and software in a specific form.

### Industrial Applicability

With the present invention, the process and time of performing signaling interaction between the RNC/BSC and VLR to obtain the ciphering key are reduced, a handover success rate is improved, and experience of the subscriber on the voice service is enhanced.

## Claims

1. A security information obtaining method, comprising:
in an initial access process of a user equipment, a multi-system core network sending a source system key to a multi-system radio access network;
during a multi-system handover, if the source system key is an initial value, the multi-system radio access network performing key conversion on the source system key to obtain a target system key.

2. The method according to claim 1, wherein: the multi-system radio access network comprises a source system radio access network and a target system radio access network; the step of the multi-system radio access network performing key conversion on the source system key to obtain a target system key during the multi-system handover if the source system key is the initial value comprises:
the source system radio access network receiving the source system key, and if the source system key is the initial value, the source system radio access network converting the source system key into the target system key, and sending the target system key to the target system radio access network, or the source system radio access network sending the source system key to the target system radio access network, and the target system radio access network converting the source system key into the target system key.

3. The method according to claim 2, further comprising: during the multi-system handover, the source system radio access network sending ciphering indicator information used to indicate whether a ciphering function is enabled before the system handover to the target system radio access network, and the target system radio access network judging whether to enable the ciphering function according to the ciphering indicator information.

4. The method according to claim 3, further comprising: if the source system key is a calculated value, and the ciphering indicator information indicates that the ciphering function is enabled, the target system radio access network acquiring the target system key from the multi-system core network.

5. The method according to claim 2, further comprising: during the multi-system handover, the source system radio access network sending cipher algorithm support information of user equipment for target system to the target system radio access network, and the target system radio access network performing ciphering according to a corresponding cipher algorithm.

6. The method according to claim 2, 3 or 5, wherein:
in a handover preparatory stage, the source system radio access network sends the ciphering indicator information, the cipher algorithm support information of user equipment for target system, the source system key, or the converted target system key to the target system radio access network through an enhanced relocation resource request message.

7. The method according to claim 1, wherein: the source system radio access network judging that the source system key is the initial value comprises:
when the multi-system core network sends the source system key to the multi-system radio access network, the multi-system core network sending key indicator information simultaneously, and the multi-system radio access network judging whether the source system key is the initial value or calculated value according to the key indicator information; or,
the source system radio access network receiving and parsing an authentication message sent by the multi-system core network, and judging whether the source system key sent by the multi-system core network is the initial value according to a parsing result.

8. A multi-system network, comprising: a multi-system core network and a multi-system radio access network;
the multi-system core network is configured to: send a source system key to a multi-system radio network side;
the multi-system radio access network is configured to: receive the source system key, and during a multi-system handover, if the source system key is an initial value generated by the multi-system core network, perform key conversion on the source system key to obtain a target system key.

9. The multi-system network according to claim 8, wherein, the multi-system radio access network comprises a source system radio access network and a target system radio access network;
the source system radio access network is configured to: receive the source system key, if the source system key is the initial value, convert the source system key into the target system key, and send the target system key to the target system radio access network, or send the source system key to the target system radio access network;
the target system radio access network is configured to: receive the converted target system key, or receive the source system key, and convert the source system key into the target system key.

10. The multi-system network according to claim 9, wherein, during the multi-system handover, the source system radio access network is further configured to: send ciphering indicator information used to indicate whether a ciphering function is enabled before the system handover to the target system radio access network; the target system radio access network is further configured to: judge whether to enable the ciphering function according to the ciphering indicator information.

11. The multi-system network according to claim 9, wherein, during the multi-system handover, the source system radio access network is further configured to: send cipher algorithm support information of user equipment for target system to the target system radio access network; the target system radio access network is further configured to: perform ciphering according to a corresponding cipher algorithm.

12. The multi-system network according to claim 9, 10 or 11, wherein,
the source system radio access network is configured to: in a handover preparatory stage, send the ciphering indicator information, the cipher algorithm support information of user equipment for target system, the source system key, or the converted target system key to the target system radio access network through an enhanced relocation resource request message.
